# EUROPÄISCHE PATENTSCHRIFT

(11) **EP 4 562 333 B1**
(45) Veröffentlichungstag und Bekanntmachung des Hinweises auf die Patenterteilung: **08.04.2026**
(21) Anmeldenummer: 23754108.1
(22) Anmeldetag: 25.07.2023
(51) Int. Cl.: F16L 37/096, F16L 37/084

(54) **STECKVERBINDER ZUM VERBINDEN VON LEITUNGEN FÜR FLÜSSIGE ODER GASFÖRMIGE MEDIEN**
PUSH-IN CONNECTOR FOR CONNECTING CONDUITS FOR LIQUID OR GASEOUS MEDIA
CONNECTEUR ENFICHABLE POUR RACCORDER DES CONDUITS POUR MILIEUX LIQUIDES OU GAZEUX

(30) Priorität: 25.07.2022 AT 505582022
(43) Veröffentlichungstag der Anmeldung: 04.06.2025
(73) Patentinhaber: Henn GmbH & Co KG., 6850 Dornbirn (AT)
(72) Erfinder: KUHLHOFF, Florian, 22457 Hamburg (DE); ELTAIF, Amin, 22073 Hamburg (DE); HALBEISEN, Lukas, 6837 Weiler (AT)
(74) Vertreter: Burger, Hannes Alfred
(86) Internationale Anmeldenummer: PCT/AT2023/060249
(87) Internationale Veröffentlichungsnummer: WO 2024/020611

(56) Entgegenhaltungen:
- AT-A4- 525 758
- US-A- 2 344 740
- US-A1- 2009 091 124
- US-A1- 2011 018 258
- US-A1- 2014 265 315

## Beschreibung

Die Erfindung betrifft eine reversibel lösbare Kupplung für eine Steckverbindung an Rohren und Schläuchen, gemäss Anspruch 1.

In der DE 102005044751 A1 ist beispielhaft ein Steckverbinder zum arretierten und abgedichteten Steckanschluss von Medienleitungen offenbart. Der Steckverbinder besteht dabei aus einem Aufnahmeteil mit einer Aufnahmeöffnung für einen leitungsseitigen Einsteckabschnitt. Im Bereich der Aufnahmeöffnung sind Haltemittel und Dichtmittel zum Arretieren bzw. Abdichten gegen die Umfangsfläche des Einsteckabschnittes vorgesehen. Das Aufnahmeteil besteht aus zwei die Aufnahmeöffnung umschließenden Teilen, wobei die Haltemittel am Innenteil angeordnet sind. Dieses ist axial relativ zu dem Basisteil zwischen einer ersten und einer zweiten Stellung bewegbar, wobei im Zusammenwirken mit dem Basisteil in der ersten Stellung im Bereich der Haltemittel ein freier Innenquerschnitt größer/gleich dem Außenquerschnitt der Umfangsfläche des Einsteckabschnittes freigehalten ist. In der in Einsteckrichtung versetzten zweiten Stellung werden die Haltemittel radial nach innen zum Eingriff gegen die Umfangsfläche des Einsteckabschnittes gebracht.

In der WO 2021185419 A1 ist eine reversibel lösbare Fluidleitungskupplung offenbart, deren Verrastungszustand leicht automatisch und vorzugsweise optisch kontrollierbar ist. Die Kupplung eine Kupplungsmuffe, ein Verriegelungselement und einen Kupplungsstecker mit einem Verriegelungsbund, wobei das Verriegelungselement bei komplett eingeschobenem Stecker eine Verriegelungsstellung einnimmt, in welcher ein Verriegelungsabschnitt auf den Stecker hin verschwenkt ist und mit einer Rastschulter oder Rastkante des Steckers fixierend zusammenwirkt. Dabei ist die Aussenseite des Verriegelungsabschnittes auf das Innere der Kupplungsmuffe verschoben, dass sie innerhalb des Sperrrings liegt. Die Verriegelungselemente weisen Betätigungs- und/oder Signalflächen auf, die nur in nicht verriegeltem Zustand der Kupplung sichtbar sind. Der Sperrring ist durch zumindest ein elastisches Element aus einer Offenstellung axial in eine das Verriegelungselement komplett überlappende Sperrstellung verstellbar ist, sobald das Verriegelungselement in Verriegelungsstellung ist.

In der US 2 344 740 A ist eine Kupplungsvorrichtung mit einem Gehäuse, das eine hindurchgehende Bohrung aufweist, einem für das Einführen in die Bohrung geeigneten Nippel sowie Mitteln zur Sicherstellung einer Abdichtung zwischen dem Nippel und dem Gehäuse bei eingeführtem Nippel offenbart. Das Gehäuse weist mehrere in Umfangsrichtung beabstandete Bohrungen auf, die sich schräg zu dessen Nippelaufnahmeöffnung hin erstrecken. In diesen Bohrungen sind mehrere starre Schieber verschiebbar angeordnet, deren abgewinkelte Enden bei vollständig eingeführtem Zustand an der Außenseite des Gehäuses anliegen. Bei eingeführten Schiebern ragen deren Enden winklig in die Gehäusebohrung hinein. Federmittel drücken gegen die abgewinkelten Enden, um die Schieber in die eingeführte Position zu bringen.

Eine Betätigungshülse umgibt das Gehäuse und weist eine innere Vertiefung auf, in die die abgewinkelten Enden hineinragen. An den abgewinkelten Enden und der Hülse befinden sich korrespondierende Mittel zur Längsbewegung der Schieber entlang des Gehäuses gegen die Kraft der Federmittel, um die Schieber zurückzuziehen, wenn die Hülse in eine bestimmte Richtung bewegt wird. Die Bohrungen, in denen sich die Schieber bewegen, sind so dimensioniert, dass sie eine seitliche Schwenkbewegung der Schieber nach außen von der Kupplungsachse ermöglichen, wenn die Hülse betätigt wird, um die Schieber zurückzuziehen. Der Nippel weist eine Nut auf, die von den ausgefahrenen Enden der Schieber erfasst wird.

In der AT525758 A4 ist eine reversibel lösbare Kupplung für eine Steckverbindung an Rohren und Schläuchen offenbart.

Aufgabe der vorliegenden Erfindung war es, die Nachteile des Standes der Technik zu überwinden und eine Vorrichtung zu schaffen, die vorwiegend aus Kunststoffteilen besteht und dennoch bei Temperaturbelastung eine sichere Verrieglung der Fluidleitungen und deren Dichtheit gewährleistet.

Diese Aufgabe wird durch eine Kupplung gemäß den Ansprüchen gelöst.

Bei der erfindungsgemäßen Kupplung ist das Verriegelungselement gegenüber der Kupplungsmuffe zwischen einer Offenstellung und der Verriegelungsstellung verstellbar und weist zumindest einen vom Verriegelungselement ausgehenden hebelartigen Abschnitt auf, der in Offenstellung gegenüber der Kupplungsmuffe verrastet ist,
wobei der hebelartige Abschnitt entfernt vom Verriegelungsabschnitt in den Einschubweg der Rastschulter oder Rastkante am Stecker ragt und spätestens bei komplett eingeschobenem Stecker aus der verrasteten Stellung gelöst ist.

Das Verriegelungselement ist gegenüber der Kupplungsmuffe zwischen der Offenstellung und der Verriegelungsstellung um eine tangentiale Schwenkachse verschwenkbar. Hierdurch ist die Möglichkeit erleichtert, über das Verriegelungselement eine Haltewirkung auf den Sperrring auszuüben.

Eine vorteilhafte Ausführungsform der Erfindung ist dadurch gekennzeichnet, dass die Schwenkachse des Verriegelungselementes in seinem mittleren Abschnitt liegt und der dem Verriegelungsabschnitt bezüglich dieser Schwenkachse gegenüberliegende Abschnitt eine Schräge oder Erhebung aufweist, und dass der Sperrring an seiner Innenseite eine Erhebung aufweist, welche auf die Schräge oder Erhebung des Verriegelungselementes radial einwirkt, wenn der Sperrring gegen die Wirkung des zumindest einen elastischen Elementes in die Offenstellung geschoben ist.

Gemäss einer weiteren Variante der Ausführungsform der Erfindung, bei welcher die Verriegelungselemente und der Sperrring einander gegenseitig in der Offenstellung halten, liegt auch hier die Schwenkachse des Verriegelungselementes in seinem mittleren Abschnitt und weist der dem Verriegelungsabschnitt bezüglich dieser Schwenkachse gegenüberliegende Abschnitt einen radial nach aussen ragenden Vorsprung auf, und weist der Sperrring an seiner Innenseite eine Schulter auf, welche axial auf den Vorsprung einwirkt, wenn der Sperrring gegen die Wirkung des elastischen Elementes in die Offenstellung geschoben wird.

Der vom Verriegelungselement ausgehende hebelartige Abschnitt verläuft in Umfangsrichtung der Kupplungsmuffe. Dies ist für eine kompakte Bauweise der Kupplung vorteilhaft.

Bevorzugt weist die Kupplungsmuffe an der Aussenseite eine Rastnase oder Rastkante auf, und hintergreift der hebelartige Abschnitt in der Offenstellung des Verriegelungselementes diese Rastnase oder Rastkante.

Gemäss einer weiteren erfindungsgemässen Ausführungsform wirkt der Sperrring in seiner Offenstellung auf das Verriegelungselement ein und hält dieses in der Offenstellung. Alternativ dazu oder auch ergänzend hält auch das Verriegelungselement in seiner Offenstellung den Sperrring in seiner Offenstellung.

Bevorzugt ist diese Ausführungsform alternativ oder ergänzend zu den Merkmalen des vorhergehenden Absatzes dadurch gekennzeichnet, dass das Verriegelungselement vorzugsweise mit einer in Höhe des Verriegelungsabschnitts radial nach aussen weisenden Rastnase in Offenstellung den oberen Rand des Sperrringes hintergreift oder in Öffnungen im oberen, umlaufenden Randabschnitt eingreift und den Sperrring axial fixiert.

Eine weitere erfindungsgemässe Ausführungsform einer Kupplung ist dadurch gekennzeichnet, dass zumindest zwei Verriegelungselemente um den Umfang der Kupplungsmuffe vorzugsweise gleichmässig verteilt angeordnet sind, wobei die hebelartigen Abschnitte nebeneinanderliegender Verriegelungselemente mit ihren Endabschnitten überlappen.

Ein weiteres optionales Erfindungsmerkmal ist dadurch gegeben, dass an der Kupplungsmuffe in Höhe des mittleren Abschnitts des Verriegelungselementes eine Erhebung angeordnet ist, an welcher die Innenseite des mittleren Abschnitts des Verriegelungselementes anliegt und welche damit die Schwenkachse definiert.

Um eine rasche und werkzeuglose Anbringung der Kupplung am Ende eines Rohres oder eines Schlauches zu ermöglichen, ist eine vorteilhaften Ausführungsform der Erfindung dadurch gekennzeichnet, dass zwischen Kupplungsmuffe und Rohr oder Schlauch eine Rastverbindung besteht.

Bevorzugt ist dabei an der Kupplungsmuffe mindestens eine Rastkante ausgebildet, welche eine Hinterschneidung am Rohr bzw. Schlauch hintergreift.

In vorteilhafter Weise kann zwischen Rohr bzw. Schlauch und Kupplungsmuffe eine Verdrehsicherung vorgesehen sein.

Eine besonders vorteilhafte weitere Ausführungsform der Erfindung ist dadurch gekennzeichnet, dass am Sperrring zumindest ein Schnapparm angeordnet ist, dessen dem Stecker zugewandtes freies Ende radial nach aussen hin elastisch auslenkbar ist, wobei das freie Ende in der Offenstellung des Sperrringes an einer Rastkante der Kupplungsmuffe abgestützt ist, und wobei das freie Ende in der Verriegelungsstellung des Verriegelungselementes durch das Verriegelungselement ausser Eingriff mit der Kupplungsmuffe gebracht ist. Damit kann der Verriegelungsmechanismus nicht ungewollt, beispielsweise durch unachtsames Anfassen des Sperrringes, ausgelöst werden. Durch die erfindungsgemässe Konstruktion stützt der Schnapparm den Sperrring im offenen / entriegelten Zustand direkt an der Kupplungsmuffe ab und entlastet dadurch das Verriegelungselement, welches nunmehr nicht noch zusätzlich den Sperrring abstützen muss.

Bevorzugt weist eine derartige Kupplung eine Kupplungsmuffe auf, welche zumindest eine auf das Rohr hin orientierte Rastkante zur Abstützung für das freie Ende des Schnapparms hat, wobei der Schnapparm in seiner Offenstellung den Sperrring in seiner Offenstellung hält.

Bevorzugt ist eine Ausführungsform einer erfindungsgemässen Kupplung, bei welcher die Kupplungsmuffe, das Verriegelungselement und der Sperrring, gegebenenfalls auch das elastische Element, zumindest überwiegend aus Kunststoff bestehen. Vorzugsweise bestehen die angeführten Bauteile zur Gänze aus Kunststoff. Da durch den oben erläuterten Aufbau der Kupplung in der Offenstellung als auch im gesteckten Zustand keine Kunststoffkomponenten deformiert sind, kann ein Kriechen der Bauteile bei Temperaturbelastung vermieden werden.

Zum besseren Verständnis der Erfindung wird diese anhand der nachfolgenden Figuren näher erläutert.

Es zeigen jeweils in stark vereinfachter, schematischer Darstellung:
Fig. 1 Eine teilweise geschnittene Seitenansicht einer ersten Ausführungsform einer erfindungsgemässen Kupplung nach dem VDA-Standard in der Offenstellung.
Fig. 2 Eine Ansicht entsprechend Fig. 1 in der gesteckten und verriegelten Stellung.
Fig. 3 Eine weitere Ausführungsform einer erfindungsgemässen Kupplung nach dem VDA-Standard in teilweise geschnittener Seitenansicht und in der gesteckten und verriegelten Stellung.
Fig. 4 Eine teilweise geschnittene Seitenansicht einer weiteren Ausführungsform einer erfindungsgemässen Kupplung nach dem SAE-Standard in der Offenstellung.
Fig. 5 Eine Detailansicht in vergrössertem Massstab der Rastverbindung von Kupplungsmuffe und Rohr oder Schlauch.
Fig. 6 Eine teilweise geschnittene Seitenansicht der Ausführungsform der Fig. 4, zur Darstellung weiterer Details.
Fig. 7 Eine Explosionsdarstellung von Rohrende und Kupplungsmuffe einer weiteren Ausführungsform einer erfindungsgemässen Kupplung nach dem SAE-Standard.
Fig. 8 Eine perspektivische Ansicht eines Rohrendes gemäss einer Ausführungsform der Erfindung.
Fig. 9 Eine perspektivische Ansicht einer Kupplungsmuffe gemäss einer Ausführungsform der Erfindung, zur Verwendung mit einem Rohrende gemäss Fig. 8.
Fig. 10 Einen Sperrring gemäss einer weiteren Ausführungsform der Erfindung in perspektivischer Ansicht.
Fig. 11 Eine perspektivische Ansicht zweier einander gegenüberliegender Verriegelungselemente gemäss einer weiteren Ausführungsform der Erfindung, zur Verwendung mit einer Kupplungsmuffe gemäss Fig. 9 und einem Sperrring gemäss Fig. 10.
Fig. 12 Einen Längsschnitt durch eine Ausführungsform der Erfindung unter Verwendung der Elemente der Fig. 8 bis 11, mit teilweise eingestecktem Stecker und in der Ebene der inneren Erhebungen des Sperrringes.
Fig. 13 Einen Längsschnitt durch die Ausführungsform der Fig. 12, in einer Ebene mit zumindest einem Schnapparm.
Fig. 14 Einen Längsschnitt durch eine Ausführungsform der Erfindung unter Verwendung der Elemente der Fig. 8 bis 11, mit komplett eingestecktem und verriegeltem Stecker und in der Ebene der inneren Erhebungen des Sperrringes.
Fig. 15 Einen Längsschnitt durch die Ausführungsform der Fig. 14, in einer Ebene mit zumindest einem Schnapparm.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

### FIGURENBESCHREIBUNG

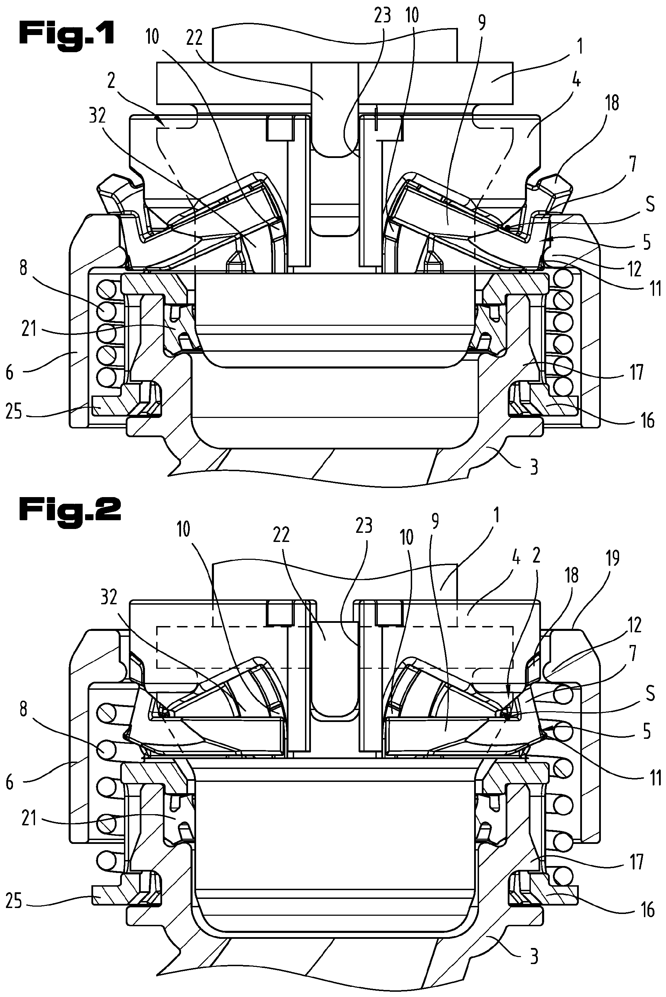

In der Fig. 1 ist beispielhaft eine erste Ausführungsform einer erfindungsgemässen reversibel lösbaren Kupplung dargestellt, wie sie für eine Steckverbindung an Rohren 3 oder Schläuchen zur Anwendung kommen kann. Mittels der Kupplung kann ein rohrförmiger Stecker 1, der hier beispielhaft in einer den Vorgaben des VDA (Verbandes der Automobilindustrie) geforderten Ausführung vorliegt, abgedichtet und verriegelbar mit dem Rohr 3 oder Schlauch verbunden werden. Derartige Stecker 1 weisen mindestens eine am Aussenumfang zumindest teilweise umlaufende Rastschulter oder Rastkante 2 auf, die vorzugsweise aus einer vom steckerseitigen Aussenumfang ansteigenden Schräge und einer sich bezüglich des steckerseitigen Aussenumfangs dahinter anschliessenden Rastfläche gebildet ist.

Am Rohr 3 ist eine Kupplungsmuffe 4 montiert oder an dessen Ende integral ausgebildet, in welche der Stecker 1 eingesteckt wird, und in der er anschliessend durch mindestens ein Verriegelungselement 5 gegen Abziehen gesichert gehalten ist. Ein Sperrring 6 ist die Kupplungsmuffe 4 und die darin oder daran gehaltenen Verriegelungselemente 5 umgreifend und axial entlang der Kupplungsmuffe 4 zwischen einer Offenstellung und einer Verriegelungsstellung verschiebbar, wobei zumindest ein elastisches Element 8, vorzugsweise eine ebenfalls die Kupplungsmuffe 4 umgreifende Schraubenfeder, den Sperrring 6 in Richtung auf die Verriegelungsstellung hin beaufschlagt.

Die Fig. 1 zeigt die Anordnung von Stecker 1 und Kupplung, umfassend zumindest die Kupplungsmuffe 4, mindestens ein Verriegelungselement 5, den Sperrring 6 und zumindest ein elastisches Element 8, im Anlieferungszustand, zu Beginn der Herstellung der dichten Steckverbindung. Der Stecker 1 ist bereits so weit in die Kupplungsmuffe 4 eingesteckt, dass eine Nocke 22 an seiner Aussenseite in eine komplementäre Ausnehmung 23 der Kupplungsmuffe 4 eingeschoben ist und derart eine Verdrehsicherung gegeben ist. Die Nocke 22 kann dabei mit der Rastschulter oder Rastkante 2 am Stecker 1 überlappen. Das vordere Ende des Steckers 1 ist bereits von einer Dichtung 21, vorzugsweise einer Profillippendichtung, überdeckt, welche in einer Aufnahmenut im vorderen Randbereich des Rohres 3 oder Schlauches gehalten ist. Allenfalls können auch ein oder mehrere O-Ringe verwendet werden, mit einem Schutz gegen Verdrillen und mit Verringerung der Fügekraft. Dies ist insbesondere bei Kupplungen entsprechend SAE (Society of Automotive Engineers) - Ausführung vorgesehen.

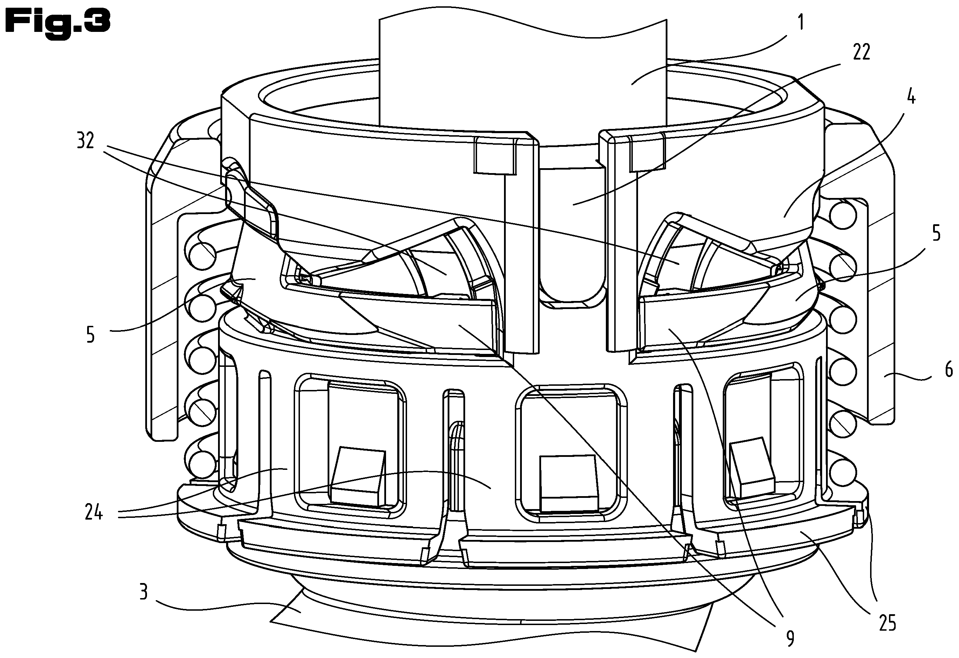

Die Kupplungsmuffe 4 ist als separater Bauteil auf das vordere Ende des Rohres 3 aufgesetzt und wird dort vorzugsweise durch eine Rastverbindung 16, 17 fixiert. Im unteren Randbereich der Kupplungsmuffe 4 ist mindestens eine radial nach innen vorspringende Rastnase oder eine Rastkante 16 ausgebildet, allenfalls am unteren Ende zumindest eines elastisch radial auslenkbaren Schnapphakens 24, wie in der in Fig. 3 dargestellten Ausführungsform dargestellt ist. Die Rastkante 16 hintergreift eine Hinterschneidung 17 oder einen begrenzten Rastvorsprung am Rohr 3 oder Schlauch und fixiert derart die Kupplungsmuffe 4 in axialer Richtung.

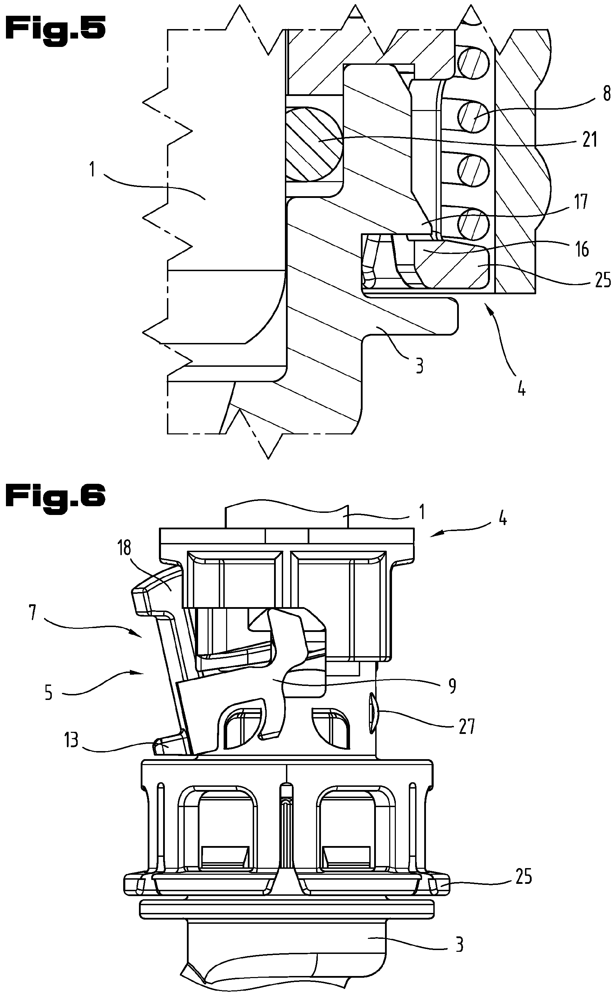

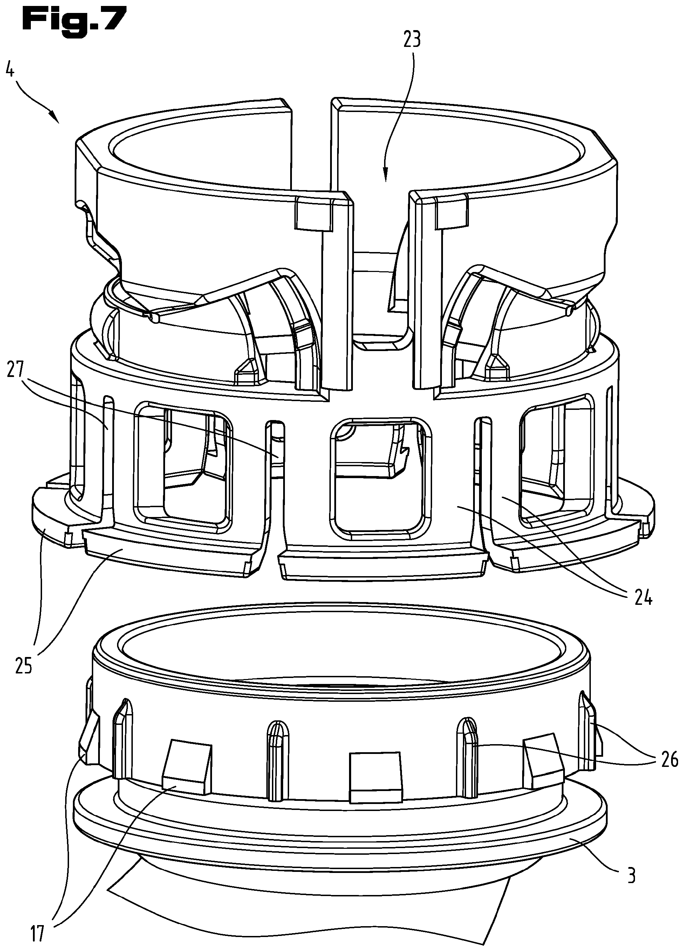

Die Rastkante 16 kann ganz umlaufend ausgeführt oder durch Teilabschnitte auf um den Umfang der Kupplungsmuffe 4 verteilte, elastisch auslenkbare Schnapphaken 24 angeordnet sein, wie in der Explosionsdarstellung der Fig. 7 gut zu erkennen ist. In Höhe der Rastkante 16 bzw. am unteren Ende der Schnapphaken 24 ist radial nach aussen vorspringend ein Bund 25, allenfalls an jedem Schnapphaken 24 ein Teilstück davon, oder eine Gruppe von Vorsprüngen angeordnet. Um die Rastverbindung vor dem Aufspringen zu sichern, ist der Abstand zwischen der Innenwand des Sperrringes 6, insbesondere seines in die Höhe der Rastverbindung reichenden Abschnittes zum Bund 25 kleiner als die Überlappung von Rastkante 16 und Hinterschneidung 17 am Rohr 3 oder Schlauch, so dass eine die Rastkante 16 freigebende radiale Auslenkung der Rastkante 16 durch vorherigen Anschlag am Sperrring 6 unterbunden ist. Diese konstruktive Ausführung und die beschriebenen Grössenverhältnisse sind speziell in der vergrösserten Detaildarstellung der Fig. 5 gut zu erkennen.

Wie auch zwischen Stecker 1 und Kupplungsmuffe 4 eine Verdrehsicherung vorgesehen sein kann, besteht auch die Möglichkeit, eine Verdrehsicherung zwischen Kupplungsmuffe 4 und Rohr 3 oder Schlauch einzurichten. Eine beispielhafte Ausführungsform ist ebenfalls in Fig. 7 dargestellt. Zwischen den umfangsmässig am Ende des Rohres 3 verteilten nasenartigen Abschnitten der Hinterschneidung 17 sind in Längsrichtung des Rohres 3 verlaufende Führungsgrate 26 angeordnet. Die Schnapphaken 24 am unteren, rohrseitigen Ende der Kupplungsmuffe 4 sind um den Umfang der Kupplungsmuffe 4 verteilt, wobei zwischen den benachbarten Schnapphaken 24 ein Abstand freigehalten ist, der als Führungszwischenraum 27 fungiert und in welchen beim Aufschieben der Kupplungsmuffe 4 auf das Rohrende die Führungsgrate 26 eingreifen. Über die Anzahl und die Winkelabstände zwischen den Führungsgraten 26 bzw. Führungszwischenräumen 27 können wahlweise diskrete Winkelstellungen zwischen Rohr 3 und Kupplungsmuffe 4 vorgeben werden. Dabei soll die Ausrichtung des Kupplungskopfes in Umfangsrichtung möglichst frei wählbar sein. Die Verrastungsgeometrie am medienführenden Stutzen kann im Spritzgusswerkzeug bei der Herstellung vorgegeben werden, so dass eine freie Winkelstellung möglich ist.

Fig. 1 zeigt weiters eines von vorzugsweise mehreren Verriegelungselemente 5 in seiner Offenstellung, in der der Stecker 1 ungehindert in die Kupplungsmuffe 4 eingeführt werden kann. Dazu ist der sich axial erstreckende Verriegelungsabschnitt 7 mit vorzugsweise einer radial nach innen hin in Richtung Stecker 1 wegragenden Rastkante vom Stecker 1 weggeschwenkt.

An der Aussenseite des Verriegelungselementes 5, vorzugsweise in Höhe des Verriegelungsabschnitts 7, ist eine radial nach aussen weisenden Rastnase 18 ausgebildet, die in der in Fig. 1 gezeigten in Offenstellung den oberen Rand 19 des Sperrringes 6 hintergreift. Eine alternative Ausführungsform könnte auch eine Öffnung für jedes Verriegelungselement 5 im oberen, umlaufenden Randabschnitt 20 des Sperrrings 6 vorsehen, in welche die Rastnase 18 eingreift. Der Sperrring 6 ist auf diese Weise durch das Verriegelungselement 5 in seiner in Richtung Rohr 3 verschobenen Offenstellung und gegen die Wirkung des elastischen Elementes 8 axial fixiert.

Im Gegenzug kann aber auch der Sperrring 6 in seiner Offenstellung auf das Verriegelungselement 5 einwirken und dieses dadurch in der Offenstellung halten. Diese Funktionalität kann ergänzend oder aber auch alternativ zur Haltewirkung der Verriegelungselemente 5 auf den Sperrring 6 vorgesehen sein.

Die Schwenkachse S des Verriegelungselementes 5 verläuft etwa in seinem mittleren Abschnitt und verläuft tangential zur Kupplungsmuffe 4. In Bezug auf diese Schwenkachse S axial gegenüberliegend dem Verriegelungsabschnitt 7 weist das Verriegelungselement 5 einen Abschnitt 11 auf, der als axial von der Schwenkachse S weg ansteigende Schräge verläuft oder eine Erhebung aufweist. Der Sperrring 6 weist an seiner Innenseite, in einer Höhe, die in Offenstellung dem Abschnitt 11 direkt gegenüberliegt, eine Erhebung 12 auf, welche auf die Schräge oder Erhebung des Verriegelungselementes 5 radial einwirkt, wenn der Sperrring 6 gegen die Wirkung des elastischen Elementes 8 in die Offenstellung geschoben ist.

Eine weitere Fixierung des Verriegelungselementes 5 in der Offenstellung wird durch zumindest einen hebelartigen Abschnitt 9 am Verriegelungselement 5 erzielt, welcher Abschnitt 9 sich in Umfangsrichtung der Kupplungsmuffe 4 erstreckt und diese teilweise umgreift. Dieser hebelartige Abschnitt 9 ist in der in Offenstellung der Kupplung gegenüber der Kupplungsmuffe 4 verrastet. Dazu weist die Kupplungsmuffe 4 an ihrer Aussenseite, im Bereich, wo das äussere Ende des hebelartigen Abschnitts 9 des Verriegelungselementes 5 in seiner Offenstellung zu liegen kommen, eine Rastnase 10 oder Rastkante auf, welche vom Ende des hebelartigen Abschnitts 9 des Verriegelungselementes 5 einrastend hintergriffen wird, wenn sich das Verriegelungselement 5 in seiner Offenstellung befindet. Damit ist eine weitere Vorkehrung getroffen, dass die Kupplung sicher offen gehalten wird, solange kein Stecker 1 eingesteckt ist.

Während des Einsteckens des Steckers 1 in die Kupplung, spätestens aber, sobald der Stecker 1 in der in Fig. 2 dargestellten Position dem Ende des Rohres 3 oder des Schlauches maximal angenähert ist, wird die Verrastung von Verriegelungselement 5 und Kupplungsmuffe 4 bzw. Sperrring 6 gelöst und das Verriegelungselement 5 gelangt in seine Verriegelungsstellung und übt dann die gewünschte Haltewirkung auf des Stecker 1 auf.

Das Lösen der Verriegelung zwischen dem hebelartigen Abschnitt 9 des Verriegelungselementes 5 und der Kupplungsmuffe 4 erfolgt während des Einschiebens des Steckers 1 dadurch, dass der hebelartige Abschnitt 9, der entfernt vom Verriegelungsabschnitt 7 in den Einschubweg der Rastschulter oder Rastkante 2 des Steckers 1 ragt, durch die Rastschulter oder Rastkante 2 spätestens bei komplett eingeschobenem Stecker 1 aus der verrasteten Stellung gelöst und nach unten hin, auf das Rohrende hin, mitgenommen worden ist. Diese Position ist in Fig. 2 dargestellt. Die Rastschulter oder Rastkante 2 ragt dabei durch eine Ausnehmung 32, die im Bereich des äussersten Endes des hebelartigen Abschnittes 9 des Verriegelungselementes 5 in der Wand der Kupplungsmuffe 4 ausgearbeitet ist, heraus bzw. ragt dieser Abschnitt 9 mit einem radial abstehenden Vorsprung durch die Ausnehmung 32 zum Stecker 1 hin. Letztere Ausführungsform bietet den Vorteil, dass die Ausnehmung 32 eine Zwangsführung für den hebelartigen Abschnitt 9 bildet.

In dieser Verriegelungsstellung der Fig. 2 ist ein sich axial erstreckender Verriegelungsabschnitt 7 - der in Fig. 2 in einer Ausnehmung der Kupplungsmuffe 4 liegt und daher nicht zu sehen ist - des Verriegelungselementes 5 auf den Stecker 1 hin verschwenkt. Der Verriegelungsabschnitt 7 hintergreift fixierend mit einer radial nach innen weisenden Rastkante die Rastschulter oder Rastkante 2 des Steckers 1. Damit ist auch die Aussenseite des Verriegelungsabschnittes 7 mit ihrer Rastnase 18 in der Verriegelungsstellung in Richtung auf das Innere der Kupplungsmuffe 4 soweit verschoben, dass die radial äussere Begrenzung des Verriegelungsabschnittes 7 komplett innerhalb der Innenseite des Sperrrings 6 liegt. Der Sperrring 6 kann damit ungehindert axial gegenüber der Kupplungsmuffe 4 verschoben werden. Insbesondere kann der Sperrring 6 durch die Wirkung des elastischen Elementes 8 vom Ende des Rohres 3 weg auf den Stecker 1 hin verschoben werden, überdeckt in der Endstellung der axialen Verschiebung die Rastnase 18 und hält dadurch das Verriegelungselement 5 in der Verriegelungsstellung.

Fig. 3 zeigt eine alternative Ausführungsform einer Kupplung mit zwei einander in Umfangsrichtung gegenüberliegenden Verriegelungselementen 5. Die hebelartigen Abschnitte 9 laufen dabei in Umfangsrichtung aufeinander zu. Einander benachbart liegende Ausnehmungen 32, die im Bereich des äussersten Endes des hebelartigen Abschnittes 9 des Verriegelungselementes 5 in der Wand der Kupplungsmuffe 4 ausgearbeitet sind, führen diese hebelartigen Abschnitte in gleicher Weise wie schon im Zusammenhang mit Fig. 1 und 2 erläutert. In allen Fällen wird dadurch die Position des Verriegelungselements 5 gesichert und auch die Verschwenkung um die tangentiale Achse S unterstützt.

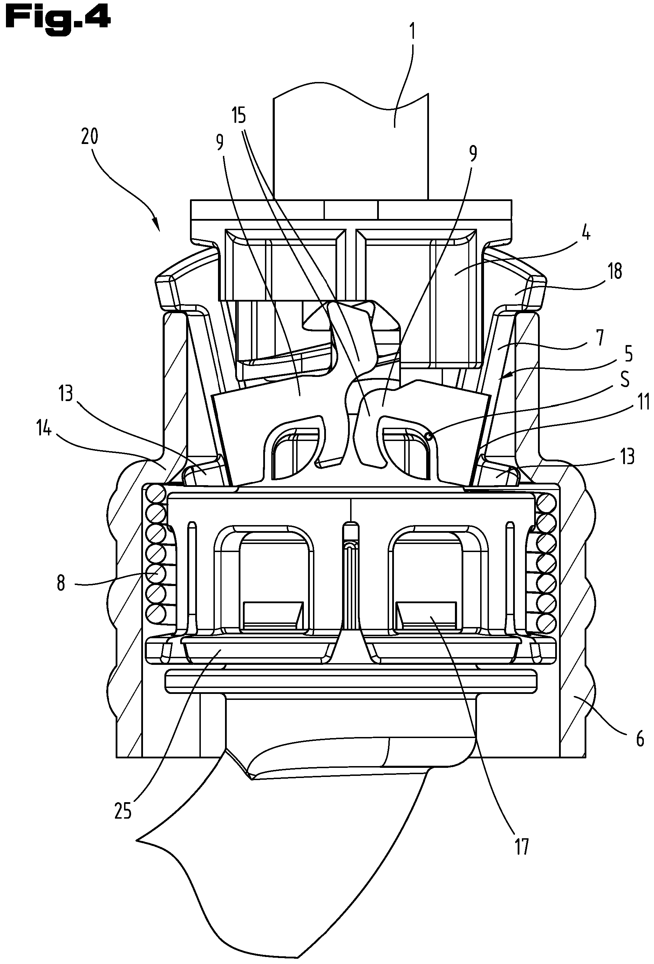

Fig. 4 stellt in teilweise geschnittener Seitenansicht entsprechend der Fig. 1 eine weitere Ausführungsform einer erfindungsgemässen Kupplung dar, die nun insbesondere für dichte und lösbar verriegelbare Verbindungen von medienführenden Leitungen nach den Vorgaben der SAE (Society of Automotive Engineers).

Um dabei die Möglichkeit zu bieten, die Verriegelung des Steckers 1 in der Kupplungsmuffe 4 mittels weniger Kontaktpunkte am Stecker 1 zu bewirken, ist für umfangsmässig benachbarte Verriegelungselemente 5, vorzugsweise in Umfangsrichtung gleichmässig verteilt, vorgesehen, dass die äussersten Enden der hebelartigen Abschnitte 9 einander in Umfangsrichtung überlappen. Jeweils ein Kontaktpunkt am Stecker 1 kann durch eine Ausnehmung 32 in der Kupplungsmuffe 4 auf zwei Verriegelungselemente 5 einwirken. Alternativ kann ein radialer Vorsprung am hebelartigen Abschnitt 9 eines Verriegelungselementes 5 durch die Ausnehmung 32 in den Weg eines radial abstehenden Kontaktpunktes am Stecker 1 ragen, um aus der in Fig. 4 gezeigten Offenstellung in die der Fig. 2 der VDA-Ausführung entsprechenden Verriegelungsstellung verschwenkt zu werden. Durch die überlappende Anordnung der Abschnitte 9 der Verriegelungselemente 5 werden dabei zwei benachbarte Verriegelungselemente 5 gleichzeitig betätigt.

Fig. 4 zeigt eine spezielle Ausführungsform mit nur zwei einander in Umfangsrichtung gegenüberliegenden Verriegelungselementen, die gemeinsam mittels nur eines Kontaktpunktes am Stecker 1 verschwenkt werden können, um derart die Verriegelung des Steckers 1 in der Kupplungsmuffe 4 zu bewirken.

In Fig. 4 ist weiters eine etwas andere Art der Einwirkung des Sperrringes 6 auf das Verriegelungselement 5 zu erkennen. Während der Sperrring 6 gemäss den Fig. 1 und 2 nur eine schmalere innere Schulter aufweist, um eine ringförmige Angriffsfläche für das elastische Element 8 zu bieten, ist eine entsprechende Schulter 14 radial weiter nach innen gezogen als es diese Funktion der Abstützung des elastischen Elementes 8 bedarf.

Mit dem innersten Randbereich der Schulter 14 wirkt der Sperrring 6 in seiner untersten Position, der dem Ende des Rohres 3 bzw. Schlauches nächsten Stellung, der Offenstellung, auf einen radialen Vorsprung 13 am unteren Ende des Verriegelungselementes 5 ein und drückt diesen Vorsprung 13 in axialer Richtung auf das Rohr 3 hin. Damit wird das Verriegelungselement 5 um die tangentiale Schwenkachse S verschwenkt und der obere Verriegelungsabschnitt 7 mit der inneren, auf den Stecker 1 hin orientierte Rastnase sowie der äusseren Rastnase 18, welche in der Offenstellung den oberen Rand des Sperrringes 6 radial überragt und damit in dessen gegen die Wirkung des elastischen Elementes 8 eingenommene Offenstellung und damit der Offenstellung der gesamten Kupplungsanordnung hält, wird radial nach aussen geschwenkt. Obwohl aufgrund der Überlappung der hebelartigen Abschnitte 9 benachbarter Verriegelungselemente 5 nicht alle Verriegelungselemente 9 einen derartigen Vorsprung 13 haben müssten, ist dies dennoch wegen der ausgewogenen Krafteinleitung und der ausgewogenen Reaktionskraft auf den Sperrring 6 vorteilhaft.

Beiden Ausführungsformen, sowohl der VDA-Kupplung der Fig. 1 bis 3 und 7, als auch der SAE-Kupplung der Fig. 4 bis 6, gemeinsam ist eine bevorzugte Ausgestaltung der Aussenseite der Kupplungsmuffe 4, um die Schwenkachse S des Verriegelungselementes 5 zu definieren. Dazu ist an der äusseren Wandung der Kupplungsmuffe 4 in Höhe des mittleren Abschnitts des Verriegelungselementes 5 eine diskrete radiale Erhebung 27 als Drehpunkt angeordnet. Der mittlere Abschnitt des Verriegelungselementes 5, anschliessend an den Verriegelungsabschnitt 7 mit seiner Rastnase 18, liegt mit seiner Innenseite an der Erhebung 27 an, welche damit die Schwenkachse S des Verriegelungselementes 5 definiert. Anstelle diskreter, um den Umfang der Kupplungsmuffe 4 verteilter Erhebungen an den Positionen der Verriegelungselemente 5 könne auch eine umlaufende gratförmige Erhebung vorgesehen sein.

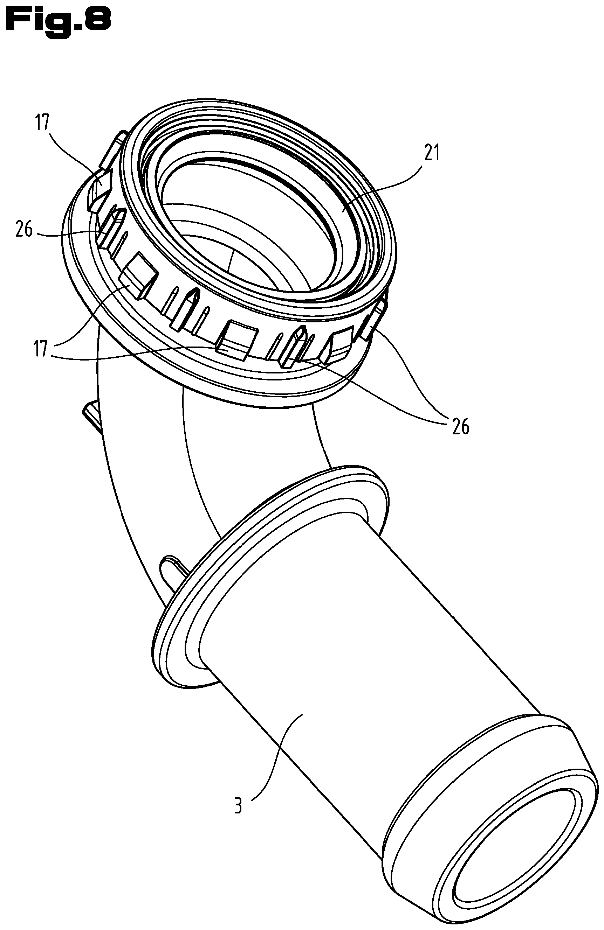

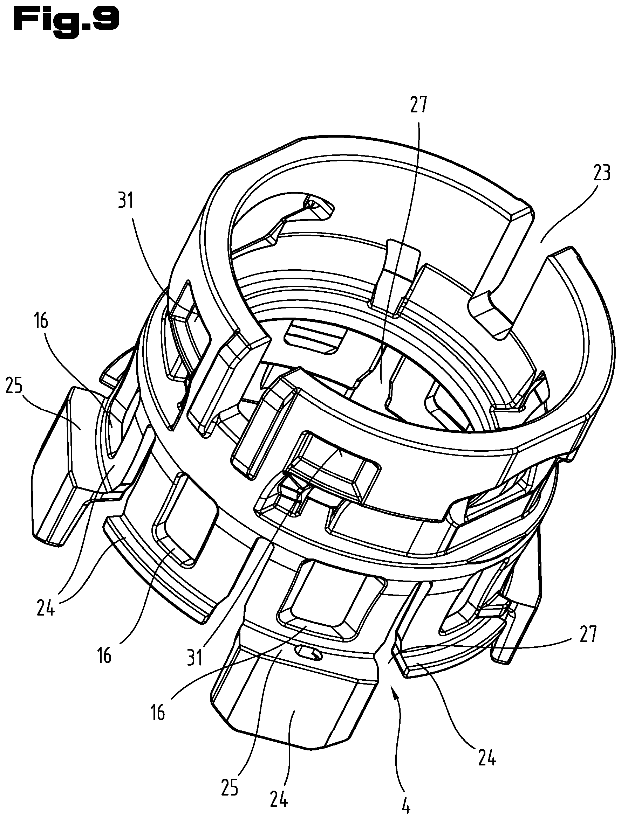

Die Fig. 8 zeigt das Vorderende eines Rohres 3 einer erfindungsgemässen Ausführungsform, das zur Verbindung mit einer Kupplungsmuffe 4 ausgelegt ist, wie sie beispielsweise in Fig. 9 dargestellt ist.

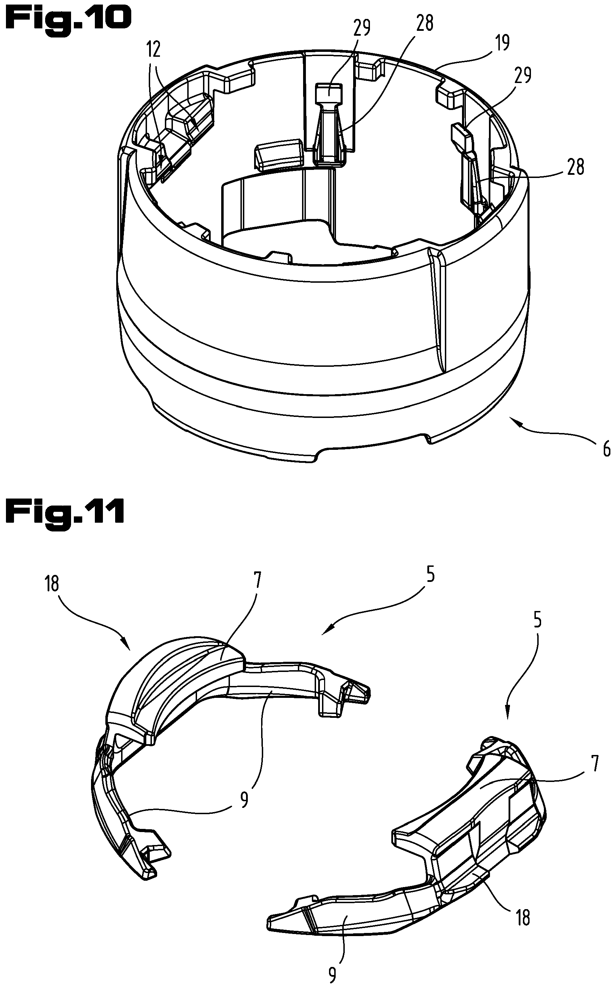

Die Kupplungsmuffe 4 ist wieder wie oben bereits erläutert als separater Bauteil auf das vordere Ende des Rohres 3 aufgesetzt und wird dort vorzugsweise durch eine Rastverbindung mit Rastkanten 16 an der Kupplungsmuffe und Rastnasen 17 am Rohrende fixiert. Die mindestens eine radial nach innen vorspringende Rastnase oder eine Rastkante 16 ist auch hier am unteren Ende zumindest eines elastisch radial auslenkbaren Schnapphakens 24 ausgebildet und hintergreift eine Hinterschneidung 17 oder einen begrenzten Rastvorsprung am Rohr 3 oder Schlauch und fixiert derart die Kupplungsmuffe 4 in axialer Richtung. Die Details dieser Rastverbindung sind vorzugsweise entsprechend den bereits oben erläuterten Merkmalen ausgeführt, vorzugsweise auch mit einer Verdrehsicherung mit in Längsrichtung des Rohres 3 verlaufende Führungsgrate 26, die mit Führungszwischenräumen 27 zusammenwirken, die zwischen den benachbarten Schnapphaken 24 ausgebildet sind.Der Sperrring 6 gemäss der in Fig. 10 dargestellten Ausführungsform weist wieder an seiner Innenseite zumindest eine Erhebung 12 pro Verriegelungselement 5 - wie in Fig. 11 dargestellt - auf, welche mit diesem zusammenwirken, zumindest wenn der Sperrring 6 gegen die Wirkung des elastischen Elementes 8 in die Offenstellung geschoben ist. In Umfangsrichtung benachbart dieser Erhebung ist nun ein Schnapparm 28 angeordnet, mit einem radial elastisch auslenkbaren freien Ende 29, das am dem Stecker 1 zugewandten Ende des Schnapparms 28 ausgebildet ist. Allenfalls kann der Schnapparm 28 zur Gänze elastisch um eine tangentiale Achse verschwenkbar sein, um das freie Ende 29 radial auszulenken.

Das freie Ende 29 des Schnapparm 28 stützt sich, wenn der Sperrring 6 in seiner maximal zurückgezogenen Position, in welcher die Kupplung sich im offenen bzw. entriegelten Zustand befindet, direkt an der Kupplungsmuffe 4 ab. Dazu ist an der Kupplungsmuffe 4 zumindest eine auf das Rohr 3 hin orientierte Rastkante 30 ausgebildet. ,

Bei der zuerst erläuterten Ausführungsform der Fig. 1 bis 7 ist das Verriegelungselement 5 am Ende der hebelartigen Abschnitte 9 gegen das Einschwenken (Verriegeln) auf den Stecker 1 hin abgestützt hat und ist der federvorgespannte Sperrring 6 vom Verriegelungselement 5 arretiert, bis dieses durch den Stecker 1im Zuge des Einsteckens in die Kupplungsmuffe 4 entriegelt wird. Durch die Abstützung mittels des Schnapparms 28 an der Kupplungsmuffe 4 ist das Verriegelungselement 5 entlastet und muss nicht zusätzlich den Sperrring 6 abstützen, und die Kupplung ist gegen unbeabsichtigtes Auslösen ohne eingesteckten Stecker 1 gesichert.

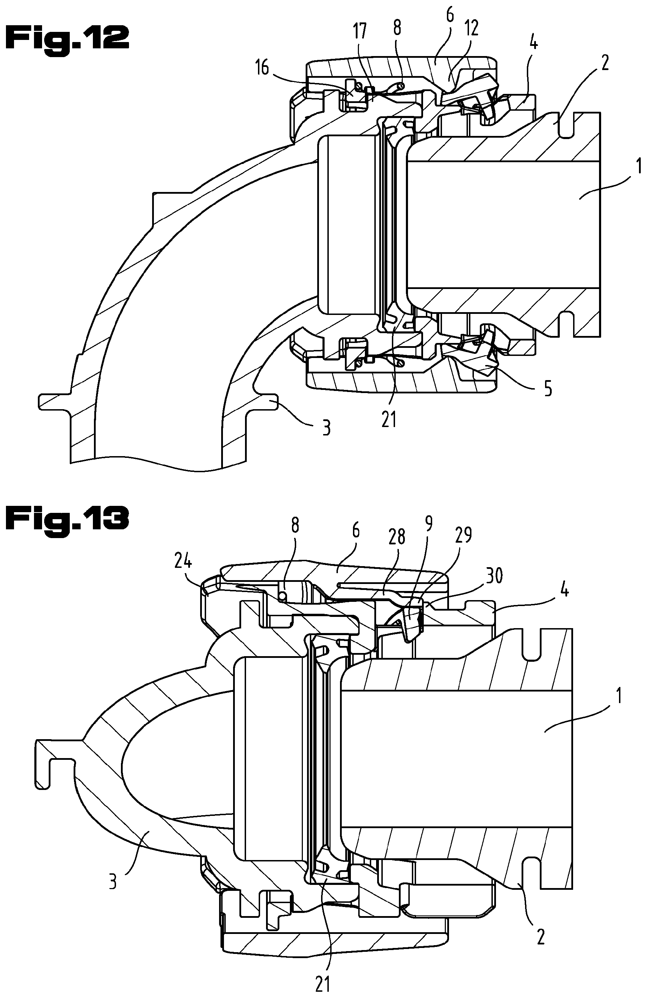

Fig. 12 zeigt im Längsschnitt in einer Ebene durch den mittleren Abschnitt der Verriegelungselemente 5 einen Zustand mit noch nicht zur Gänze eingesteckten Stecker 1. Der Stecker 1 wirkt noch nicht auf die Verriegelungselemente 5 ein, die noch nicht die Rastkante 2 am Stecker 1 hintergreifen. In Fig. 13 ist ein Längsschnitt durch die Anordnung der Fig. 12 dargestellt, nun aber in einer um die Längsachse verdrehten Ebene, die durch einen Schnapparm 28 verläuft. Dessen freies Ende 29 stützt sich an der Rastkante 30 der Kupplungsmuffe 4 ab und hält den Sperrring 6 gegen die Wirkung der Druckfeder 8 in seiner hinteren Offenstellung. Eine Haltewirkung durch die Verriegelungselemente 5 wird hier nicht benötigt, kann aber als zusätzliche Sicherung gemäss einer weiteren Ausführungsform vorgesehen sein.

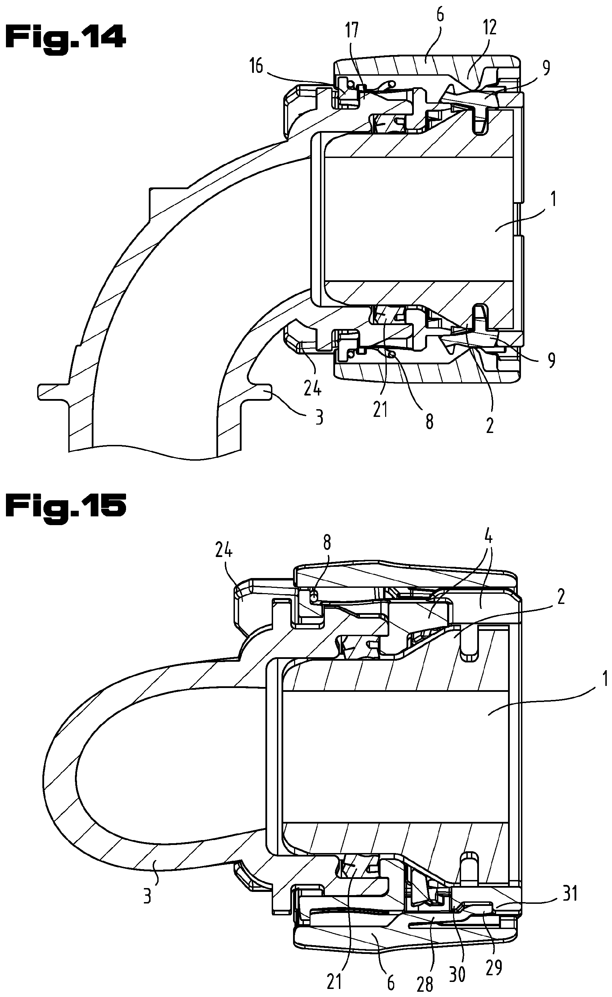

Wenn nun der Stecker 1 zur Gänze eingesteckt ist - wie in Fig. 14 dargestellt ist - wird durch den Stecker 1 der hebelartige Abschnitt 9 des Verriegelungselementes 5 radial nach außen gehoben, so dass das Verriegelungselement 5 in radialer Richtung nach aussen hin auf den Schnapparm 28 einwirkt, vorzugsweise mittels des hebelartigen Abschnitt 9. Das freie Ende 29 des Schnapparms 28 wird dadurch ebenfalls nach außen hin ausgelenkt, aus der Abstützung an der Kupplungsmuffe 4 herausgedrückt, d.h. ausser Eingriff mit der Rastkante 30 der Kupplungsmuffe 3 gebracht. Damit wird die Anordnung entriegelt, wonach das Verriegelungselement 5 über die Rastnase 10 angehoben und zur Verriegelung des Steckers 1 eingeschwenkt werden kann, und wobei nun auch der Sperrring 6 axial in Richtung auf den Stecker 1 hin in die geschlossene bzw. verriegelte Stellung verschoben werden kann. Vorzugsweise erfolgt diese Verschiebung durch die Wirkung der Druckfeder 8 auf den Sperrring 6.

Wie im Längsschnitt der Fig. 15 auch zu sehen ist, kann bei entsprechender Ausführung der Kupplungsmuffe 4 mit einer weiteren, der Einstecköffnung näher liegenden Rastkante 31 der Schnapparm 28 noch die Zusatzfunktion aufweisen, den Sperrring 6 auch im geschlossenen bzw. verriegelten Zustand der Kupplung axial zu sichern.

Ebenfalls für alle erfindungsgemässen Ausführungsformen gilt, dass möglichst viele Bauteile zumindest überwiegend aus Kunststoff bestehen. Dies gilt insbesondere für die Kupplungsmuffe 4, das Verriegelungselement 5 und den Sperrring 6. Auch für das elastische Element 8 gibt es die Möglichkeit, es aus elastisch verformbarem Kunststoff und mit der erforderlichen Federkonstante herzustellen.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind. Der

Schutzbereich ist durch die Ansprüche bestimmt. Die Beschreibung und die Zeichnungen sind jedoch zur Auslegung der Ansprüche heranzuziehen.

### Bezugszeichenaufstellung

| | | | |
|---|---|---|---|
| 1 | Stecker | 31 | Weitere Rastkante der Kupplungsmuffe |
| 2 | Rastkante | | |
| 3 | Rohr | 32 | Ausnehmung |
| 4 | Kupplungsmuffe | S | Schwenkachse |
| 5 | Verriegelungselement | | |
| 6 | Sperrring | | |
| 7 | Verriegelungsabschnitt | | |
| 8 | Elastisches Element | | |
| 9 | Hebelartiger Abschnitt | | |
| 10 | Rastnase | | |
| 11 | Erhebung/Schräge | | |
| 12 | Erhebung | | |
| 13 | Radialer Vorsprung | | |
| 14 | Schulter | | |
| 15 | Endabschnitt | | |
| 16 | Rastkante | | |
| 17 | Hinterschneidung | | |
| 18 | Rastnase | | |
| 19 | Oberer Rand | | |
| 20 | Oberer umlaufender Randabschnitt | | |
| 21 | Dichtung | | |
| 22 | Nocke | | |
| 23 | Ausnehmung | | |
| 24 | Schnapphaken | | |
| 25 | Bund | | |
| 26 | Führungsgrat | | |
| 27 | Erhebung | | |
| 28 | Schnapparm | | |
| 29 | Freies Ende des Schnapparms | | |
| 30 | Rastkante der Kupplungsmuffe | | |

## Patentansprüche

1. Reversibel lösbare Kupplung für eine Steckverbindung an Rohren (3) und Schläuchen, zur Verbindung mit einem rohrförmigen Stecker (1), der mindestens eine am Aussenumfang zumindest teilweise umlaufende Rastschulter oder Rastkante (2) aufweist, die vorzugsweise aus einer vom steckerseitigen Aussenumfang ansteigenden Schräge und einer sich bezüglich des steckerseitigen Aussenumfangs dahinter anschliessenden Rastfläche gebildet ist,
die Kupplung umfassend
- mindestens eine am Rohr (3) oder Schlauch anordenbare Kupplungsmuffe (4),
- mindestens ein Verriegelungselement (5) und
- einen die Kupplungsmuffe (4) umgreifenden Sperrring (6),
wobei das Verriegelungselement (5) bei komplett eingeschobenem Stecker (1) eine Verriegelungsstellung (Fig. 2) einnimmt, in welcher ein sich axial erstreckender Verriegelungsabschnitt (7) des Verriegelungselementes (5) auf den Stecker (1) hin verschwenkt ist und mit einer radial nach innen weisenden Rastkante die Rastschulter oder Rastkante (2) des Steckers (1) fixierend hintergreift, und wobei die Aussenseite des Verriegelungsabschnittes (7) in der Verriegelungsstellung in Richtung auf das Innere der Kupplungsmuffe (4) soweit verschoben ist, dass sie innerhalb des Sperrrings (6) liegt und dieser axial freigegeben ist, und wobei der Sperrring (6) durch zumindest ein elastisches Element (8) aus einer Offenstellung (Fig. 1, Fig. 3) axial in eine den Verriegelungsabschnitt (7) komplett überlappende Sperrstellung (Fig. 2) verstellbar ist, sobald das Verriegelungselement (5) in Verriegelungsstellung ist, wobei das Verriegelungselement (5) gegenüber der Kupplungsmuffe (4) zwischen einer Offenstellung (Fig. 1, Fig. 3) und der Verriegelungsstellung (Fig. 2) verstellbar ist und zumindest einen vom Verriegelungselement (5) ausgehenden hebelartigen Abschnitt (9) aufweist, der in Offenstellung gegenüber der Kupplungsmuffe (4) verrastet ist, wobei der hebelartige Abschnitt (9) entfernt vom Verriegelungsabschnitt (7) in den Einschubweg der Rastschulter oder Rastkante (2) am Stecker (1) ragt und spätestens bei komplett eingeschobenem Stecker (1) aus der verrasteten Stellung gelöst ist, wobei das Verriegelungselement (5) gegenüber der Kupplungsmuffe (4) zwischen der Offenstellung (Fig. 1, Fig. 3) und der Verriegelungsstellung (Fig. 2) um eine tangentiale Schwenkachse (S) verschwenkbar ist, wobei der vom Verriegelungselement (5) ausgehende hebelartige Abschnitt (9) in Umfangsrichtung der Kupplungsmuffe (4) verläuft.

2. Kupplung nach Anspruch 1, **dadurch gekennzeichnet, dass** die Kupplungsmuffe (4) an der Aussenseite eine Rastnase (10) oder Rastkante aufweist, und der hebelartige Abschnitt (9) in der Offenstellung des Verriegelungselementes (5) diese Rastnase (10) oder Rastkante hintergreift.

3. Kupplung nach Anspruch 1 oder 2, **dadurch gekennzeichnet, dass** der Sperrring (6) in seiner Offenstellung (Fig. 1, Fig. 3) auf das Verriegelungselement (5) einwirkt und dieses in der Offenstellung hält, und/oder dass das Verriegelungselement (5) in seiner Offenstellung den Sperrring (6) in seiner Offenstellung hält.

4. Kupplung nach Anspruch 3, **dadurch gekennzeichnet, dass** die Schwenkachse (S) des Verriegelungselementes (5) in seinem mittleren Abschnitt liegt und der dem Verriegelungsabschnitt (7) bezüglich dieser Schwenkachse (S) gegenüberliegende Abschnitt (11) eine Schräge oder Erhebung aufweist, und dass der Sperrring (6) an seiner Innenseite eine Erhebung (12) aufweist, welche auf die Schräge oder Erhebung des Verriegelungselementes (5) radial einwirkt, wenn der Sperrring (6) gegen die Wirkung des elastischen Elementes (8) in die Offenstellung geschoben ist.

5. Kupplung nach Anspruch 3 oder 4, **dadurch gekennzeichnet, dass** das Verriegelungselement (5) vorzugsweise mit einer in Höhe des Verriegelungsabschnitts (7) radial nach aussen weisenden Rastnase (18) in Offenstellung den oberen Rand (19) des Sperringes (6) hintergreift oder in Öffnungen im oberen, um laufenden Randabschnitt (20) eingreift und den Sperring (6) axial fixiert.

6. Kupplung nach einem der Ansprüche 3 oder 5, **dadurch gekennzeichnet, dass** die Schwenkachse (S) des Verriegelungselementes (5) in seinem mittleren Abschnitt liegt und der dem Verriegelungsabschnitt (7) bezüglich dieser Schwenkachse (S) gegenüberliegende Abschnitt (11) einen radial nach aussen ragenden Vorsprung (13) aufweist, und dass der Sperrring (6) an seiner Innenseite eine Schulter (14) aufweist, welche axial auf den Vorsprung (13) einwirkt, wenn der Sperrring (6) gegen die Wirkung des elastischen Elementes (8) in die Offenstellung geschoben wird.

7. Kupplung nach einem der Ansprüche 1 bis 6, **dadurch gekennzeichnet, dass** zumindest zwei Verriegelungselemente (5) um den Umfang der Kupplungsmuffe (4) vorzugsweise gleichmässig verteilt angeordnet sind, wobei die hebelartigen Abschnitte (9) nebeneinanderliegender Verriegelungselemente (5) mit ihren Endabschnitten (15) überlappen.

8. Kupplung nach einem der Ansprüche 1 bis 7, **dadurch gekennzeichnet, dass** an der Kupplungsmuffe (4) in Höhe des mittleren Abschnitts des Verriegelungselementes (5) eine Erhebung (27) angeordnet ist, an welcher die Innenseite des mittleren Abschnitts des Verriegelungselementes (5) anliegt und welche damit die Schwenkachse (S) definiert.

9. Kupplung nach einem der Ansprüche 1 bis 8, **dadurch gekennzeichnet, dass** zwischen Kupplungsmuffe (4) und Rohr (3) oder Schlauch eine Rastverbindung (16, 17) bestehen kann.

10. Kupplung nach Anspruch 9, **dadurch gekennzeichnet, dass** an der Kupplungsmuffe (4) mindestens eine Rastkante (16) ausgebildet ist und eine Hinterschneidung (17) am Rohr (3) bzw. Schlauch hintergreifen kann.

11. Kupplung nach Anspruch 9 oder 10, **dadurch gekennzeichnet, dass** eine Verdrehsicherung zwischen Rohr (3) bzw. Schlauch und Kupplungsmuffe (4) vorgesehen ist.

12. Kupplung nach mindestens einem der Ansprüche 1 bis 11, **dadurch gekennzeichnet, dass** die Kupplungsmuffe (4), das Verriegelungselement (5) und der Sperring (6), gegebenenfalls auch das elastische Element (8), zumindest überwiegend aus Kunststoff bestehen.

13. Kupplung nach Anspruch 1, **dadurch gekennzeichnet, dass** am Sperrring (6) zumindest ein Schnapparm (28) angeordnet ist, dessen dem Stecker (1) zugewandtes freies Ende (29) radial nach aussen hin elastisch auslenkbar ist, wobei das freie Ende (29) in der Offenstellung des Sperrringes (6) an einer Rastkante (30) der Kupplungsmuffe (4) abgestützt ist, und wobei das freie Ende (29) in der Verriegelungsstellung des Verriegelungselementes (5) durch das Verriegelungselement (5) ausser Eingriff mit der Kupplungsmuffe (4) gebracht ist.

14. Kupplung nach Anspruch 13, **dadurch gekennzeichnet, dass** die Kupplungsmuffe (4) zumindest eine auf das Rohr (3) hin weisende Rastkante (30) zur Abstützung für das freie Ende (29) des Schnapparms (28) aufweist, und dass der Schnapparm (28) in seiner Offenstellung den Sperrring (6) in seiner Offenstellung hält.

## Claims

1. A reversibly releasable coupling for a plug-in connection on pipes (3) and hoses, for connection to a tubular plug (1) which has at least one latching shoulder or latching edge (2) running at least partially around the outer circumference, which is preferably formed from a bevel rising from the outer circumference on the plug side and a latching surface adjoining therebehind with respect to the outer circumference on the plug side, the coupling comprising
- at least one coupling sleeve (4) arrangeable on the pipe (3) or hose,
- at least one locking element (5) and
- a locking ring (6) engaging around the coupling sleeve (4),
wherein the locking element (5) assumes a locking position (fig. 2) when the plug (1) is fully inserted, in which an axially extending locking section (7) of the locking element (5) is pivoted towards the plug (1) and engages behind the latching shoulder or latching edge (2) of the plug (1) with a radially inwardly pointing latching edge in a fixing manner, and wherein the outer side of the locking section (7) in the locking position is shifted towards the inside of the coupling sleeve (4) to such an extent that it lies inside the locking ring (6) and the latter is axially released, and wherein the locking ring (6) can be moved axially by at least one elastic element (8) from an open position (fig. 1, fig. 3) into a locking position (fig. 2) completely overlapping the locking section (7) as soon as the locking element (5) is in the locking position, wherein the locking element (5) is adjustable relative to the coupling sleeve (4) between an open position (fig. 1, fig. 3) and the locking position (fig. 2) and has at least one lever-like section (9) which extends from the locking element (5) and is latched relative to the coupling sleeve (4) in the open position, wherein the lever-like section (9) projects into the insertion path of the latching shoulder or latching edge (2) on the plug (1) distant from the locking section (7) and is released from the latched position at the latest when the plug (1) is fully inserted, wherein the locking element (5) can be pivoted about a tangential pivot axis (S) relative to the coupling sleeve (4) between the open position (fig. 1, fig. 3) and the locking position (fig. 2), wherein the lever-like section (9) extending from the locking element (5) runs in the circumferential direction of the coupling sleeve (4).

2. The coupling according to claim 1, **characterized in that** the coupling sleeve (4) has a latching nose (10) or latching edge on the outside, and the lever-like section (9) engages behind this latching nose (10) or latching edge in the open position of the locking element (5).

3. The coupling according to claim 1 or 2, **characterized in that** the locking ring (6) in its open position (fig. 1, fig. 3) acts on the locking element (5) and holds it in the open position, and/or **in that** the locking element (5) in its open position holds the locking ring (6) in its open position.

4. The coupling according to claim 3, **characterized in that** the pivot axis (S) of the locking element (5) lies in its central section and the section (11) opposite the locking section (7) with respect to this pivot axis (S) has a bevel or elevation, and **in that** the locking ring (6) has an elevation (12) on its inner side which acts radially on the bevel or elevation of the locking element (5) when the locking ring (6) is pushed into the open position against the action of the elastic element (8).

5. The coupling according to claim 3 or 4, **characterized in that** the locking element (5) preferably engages behind the upper edge (19) of the locking ring (6) in the open position with a locking nose (18) pointing radially outwards at the height of the locking section (7) or engages in openings in the upper, circumferential edge section (20) and axially fixes the locking ring (6).

6. The coupling according to one of claims 3 or 5, **characterized in that** the pivot axis (S) of the locking element (5) lies in its central section and the section (11) opposite the locking section (7) with respect to this pivot axis (S) has a projection (13) projecting radially outwards, and **in that** the locking ring (6) has a shoulder (14) on its inner side which acts axially on the projection (13) when the locking ring (6) is pushed into the open position against the action of the elastic element (8).

7. The coupling according to one of claims 1 to 6, **characterized in that** at least two locking elements (5) are preferably evenly distributed around the circumference of the coupling sleeve (4), wherein the lever-like sections (9) of adjacent locking elements (5) overlap with their end sections (15).

8. The coupling according to one of claims 1 to 7, **characterized in that** an elevation (27) is arranged on the coupling sleeve (4) at the height of the central section of the locking element (5), against which elevation the inside of the central section of the locking element (5) abuts and which thus defines the pivot axis (S).

9. The coupling according to one of claims 1 to 8, **characterized in that** there can be a latching connection (16, 17) between the coupling sleeve (4) and the pipe (3) or hose.

10. The coupling according to claim 9, **characterized in that** at least one latching edge (16) is configured on the coupling sleeve (4) and engages behind an undercut (17) on the pipe (3) and/or hose.

11. The coupling according to claim 9 or 10, **characterized in that** a rotation lock is provided between the pipe (3) and/or hose and the coupling sleeve (4).

12. The coupling according to at least one of claims 1 to 11, **characterized in that** the coupling sleeve (4), the locking element (5) and the locking ring (6), optionally also the elastic element (8), are made at least predominantly of plastic.

13. The coupling according to claim 1, **characterized in that** at least one snap arm (28) is arranged on the locking ring (6), the free end (29) of which arm facing the plug (1) can be elastically deflected radially outwards, wherein the free end (29) is supported on a latching edge (30) of the coupling sleeve (4) in the open position of the locking ring (6), and wherein the free end (29) is brought out of engagement with the coupling sleeve (4) by the locking element (5) in the locking position of the locking element (5).

14. The coupling according to claim 13, **characterized in that** the coupling sleeve (4) has at least one latching edge (30) pointing towards the pipe (3) for supporting the free end (29) of the snap arm (28), and **in that** the snap arm (28), in its open position, holds the locking ring (6) in its open position.

## Revendications

1. Couplage amovible de manière réversible pour une connexion enfichable au niveau de tubes (3) et de tuyaux, permettant une connexion à une fiche tubulaire (1) présentant au moins un épaulement d'encliquetage ou une arête d'encliquetage (2) faisant au moins partiellement le tour de la périphérie extérieure et constitué(e) de manière préférée d'une pente ascendante à partir de la périphérie extérieure côté fiche et d'une surface d'encliquetage se raccordant à l'arrière de celle-ci par rapport à la périphérie extérieure côté fiche,
le couplage comprenant
- au moins un manchon de couplage (4) pouvant être agencé au niveau du tube (3) ou du tuyau,
- au moins un élément de verrouillage (5) et
- une bague de blocage (6) entourant le manchon de couplage (4),
dans lequel l'élément de verrouillage (5) occupe, lorsque la fiche (1) est complètement insérée, une position de verrouillage (figure 2) dans laquelle une section de verrouillage (7), s'étendant axialement, de l'élément de verrouillage (5) est pivotée vers la fiche (1) et vient en prise par l'arrière, grâce à une arête d'encliquetage dirigée radialement vers l'intérieur, avec l'épaulement d'encliquetage ou l'arête d'encliquetage (2) de la fiche (1) de manière à l'immobiliser, et dans lequel la face extérieure de la section de verrouillage (7) dans la position de verrouillage est décalée vers l'intérieur du manchon de couplage (4) jusqu'à ce qu'elle se trouve à l'intérieur de la bague de blocage (6) et soit libérée axialement, et dans lequel la bague de blocage (6) est réglable axialement grâce à au moins un élément élastique (8) depuis une position ouverte (figure 1, figure 3) jusque dans une position de blocage (figure 2) avec chevauchement complet de la section de verrouillage (7), dès que l'élément de verrouillage (5) est en position de verrouillage, dans lequel l'élément de verrouillage (5) est réglable par rapport au manchon de couplage (4) entre une position ouverte (figure 1, figure 3) et la position de verrouillage (figure 2) et présente au moins une section de type levier (9) qui part de l'élément de verrouillage (5) et qui, en position ouverte, est verrouillée par rapport au manchon de couplage (4), dans lequel la section de type levier (9) fait saillie au niveau de la fiche (1) dans le chemin d'insertion de l'épaulement d'encliquetage ou de l'arête d'encliquetage (2) à distance de la section de verrouillage (7) et est libérée de la position verrouillée au plus tard lorsque la fiche (1) est complètement insérée, dans lequel l'élément de verrouillage (5) peut pivoter par rapport au manchon de couplage (4) autour d'un axe de pivotement tangentiel (S) entre la position ouverte (figure 1, figure 3) et la position de verrouillage (figure 2), dans lequel la section de type levier (9) partant de l'élément de verrouillage (5) s'étend dans la direction périphérique du manchon de couplage (4).

2. Couplage selon la revendication 1, **caractérisé en ce que** le manchon de couplage (4) présente au niveau de la face extérieure un ergot d'encliquetage (10) ou une arête d'encliquetage, et la section de type levier (9) vient en prise par l'arrière avec ledit ergot d'encliquetage (10) ou ladite arête d'encliquetage dans la position ouverte de l'élément de verrouillage (5).

3. Couplage selon la revendication 1 ou 2, **caractérisé en ce que** la bague de blocage (6), dans sa position ouverte (figure 1, figure 3), agit sur l'élément de verrouillage (5) et le retient dans la position ouverte, et/ou **en ce que** l'élément de verrouillage (5), dans sa position ouverte, retient la bague de blocage (6) dans sa position ouverte.

4. Couplage selon la revendication 3, **caractérisé en ce que** l'axe de pivotement (S) de l'élément de verrouillage (5) se trouve dans sa section centrale et la section (11) opposée à la section de verrouillage (7) par rapport audit axe de pivotement (S) présente une pente ou une élévation, et **en ce que** la bague de blocage (6) présente au niveau de sa face intérieure une élévation (12) qui agit radialement sur la pente ou l'élévation de l'élément de verrouillage (5) lorsque la bague de blocage (6) est poussée dans la position ouverte à l'encontre de l'action de l'élément élastique (8).

5. Couplage selon la revendication 3 ou 4, **caractérisé en ce que** l'élément de verrouillage (5) vient en prise par l'arrière avec le bord supérieur (19) de la bague de blocage (6) dans la position ouverte, de manière préférée grâce à un ergot d'encliquetage (18) orienté radialement vers l'extérieur à hauteur de la section de verrouillage (7), ou vient en prise dans des orifices de la section de bord supérieure périphérique (20) et immobilise axialement la bague de blocage (6).

6. Couplage selon l'une quelconque des revendications 3 ou 5, **caractérisé en ce que** l'axe de pivotement (S) de l'élément de verrouillage (5) se trouve dans sa section centrale et la section (11) opposée à la section de verrouillage (7) par rapport audit axe de pivotement (S) présente une saillie (13) faisant saillie radialement vers l'extérieur, et **en ce que** la bague de blocage (6) présente au niveau de sa face intérieure un épaulement (14) qui agit axialement sur la saillie (13) lorsque la bague de blocage (6) est poussée dans la position ouverte à l'encontre de l'action de l'élément élastique (8).

7. Couplage selon l'une quelconque des revendications 1 à 6, **caractérisé en ce qu'**au moins deux éléments de verrouillage (5) sont agencés de manière préférée de manière uniformément répartie autour de la périphérie du manchon de couplage (4), dans lequel les sections de type levier (9) d'éléments de verrouillage (5) adjacents se chevauchent grâce à leurs sections d'extrémité (15).

8. Couplage selon l'une quelconque des revendications 1 à 7, **caractérisé en ce qu'**une élévation (27), contre laquelle repose la face intérieure de la section centrale de l'élément de verrouillage (5) et qui définit ainsi l'axe de pivotement (S), est agencée sur le manchon de couplage (4) à hauteur de la section centrale de l'élément de verrouillage (5).

9. Couplage selon l'une quelconque des revendications 1 à 8, **caractérisé en ce qu'**une connexion par encliquetage (16, 17) peut être constituée entre le manchon de couplage (4) et le tube (3) ou tuyau.

10. Couplage selon la revendication 9, **caractérisé en ce qu'**au moins une arête d'encliquetage (16) est réalisée au niveau du manchon de couplage (4) et **en ce qu'**une contre-dépouille (17) peut venir en prise par l'arrière avec le tube (3) ou tuyau.

11. Couplage selon la revendication 9 ou 10, **caractérisé en ce qu'**un dispositif anti-rotation est fourni entre le tube (3) ou tuyau et le manchon de couplage (4).

12. Couplage selon au moins l'une quelconque des revendications 1 à 11, **caractérisé en ce que** le manchon de couplage (4), l'élément de verrouillage (5) et la bague de blocage (6), le cas échéant également l'élément élastique (8), sont au moins principalement constitués de matière plastique.

13. Couplage selon la revendication 1, **caractérisé en ce qu'**au moins un bras d'accroche (28), dont l'extrémité libre (29) tournée vers la fiche (1) peut être déviée de manière élastique radialement vers l'extérieur, est agencé au niveau de la bague de blocage (6), dans lequel l'extrémité libre (29), dans la position ouverte de la bague de blocage (6), s'appuie contre une arête d'encliquetage (30) du manchon de couplage (4), et dans lequel l'extrémité libre (29), dans la position de verrouillage de l'élément de verrouillage (5), est mise hors de prise d'avec le manchon de couplage (4) grâce à l'élément de verrouillage (5).

14. Couplage selon la revendication 13, **caractérisé en ce que** le manchon de couplage (4) présente au moins une arête d'encliquetage (30) dirigée vers le tube (3) et offrant un appui à l'extrémité libre (29) du bras d'accroche (28), et **en ce que** le bras d'accroche (28) dans sa position ouverte retient la bague de blocage (6) dans sa position ouverte.
